# EUROPÄISCHE PATENTANMELDUNG

(11) **EP 3 115 238 A1**
(43) Veröffentlichungstag der Anmeldung: **11.01.2017**
(21) Anmeldenummer: 15175925.5
(22) Anmeldetag: 08.07.2015
(51) Int. Cl.: B60J 7/04, B62D 33/06, B60J 3/00

(54) **STRASSENFERTIGER MIT ERWEITERBAREM DACH**

(71) Anmelder: Ammann Schweiz AG, 4901 Langenthal (CH)
(72) Erfinder: Truffer, Samuel, 3920 Zermatt (CH); Stein, Hagen, 4900 Langenthal (CH); Ackermann, Hans Peter, 95643 Tirschenreuth (DE)
(74) Vertreter: Dittmann, Rolf

(57) **Zusammenfassung**

Beschrieben ist ein Strassenfertiger, umfassend einen Bedienstand (1), wobei der Bedienstand wenigstens einen seitlich einer Kanzel (15) des Bedienstandes auskragend anordenbaren Bedienerplatz (11) umfasst, und wobei weiterhin ein Dach (2) angeordnet ist, welches den Bedienstand überdeckt und welches seitlich erweiterbar ist, um im erweiterten Zustand den auskragenden Bedienerplatz zu überdecken. Das Dach umfasst ein Grundelement (21) und wenigstens ein Erweiterungselement (22), welches Erweiterungselement an dem Grundelement gelagert ist und relativ zu dem Grundelement zwischen einer maximal eingeschobenen und einer maximal ausgezogenen Position verschiebbar ist, wobei das Erweiterungselement relativ zu dem Grundelement ausschliesslich translatorisch verschiebbar ist.

## Beschreibung

### TECHNISCHES GEBIET

Die vorliegende Beschreibung betrifft einen Strassenfertiger der im Anspruch 1 beschriebenen Art.

### TECHNOLOGISCHER HINTERGRUND

Baumaschinen werden häufig mit einem Dach ausgestattet. Dieses dient als Wetter- und Sonnenschutz für einen Bedienstand.

Der Bedienstand umfasst beispielsweise bei Strassenfertigern wenigstens einen Bedienplatz, der seitlich ausschwenkbar ist. Bei grossen Strassenfertigern werden üblicherweise auf beiden Seiten der Maschine seitlich ausschwenkbare Bedienplätze angeordnet. Durch das Ausschwenken des Bedienplatzes wird der Bediener seitlich neben der eigentlichen Maschine platziert. Dadurch erhält der Bediener einen besseren Blick auf das Arbeitsareal. Ebenso wird durch die freie Position des Bedieners die Kommunikation mit dem Baustellenteam vereinfacht. Auf der anderen Seite gerät der Bedienplatz durch das Ausschwenken ausserhalb des Schutzbereichs eines über einer Kanzel des Bedienstandes angeordneten Daches. Dieses Dach kann selbstverständlich nicht beliebig breit gebaut werden, falls es bei einer Verschiebefahrt auf der Baumaschine, insbesondere auf dem Strassenfertiger, verbleiben soll. Beim Verschieben der Maschine im öffentlichen Verkehrsraum, ob selbstfahrend oder auf einem Transporter, muss die Breite über Alles selbstverständlich in einem zulässigen Mass gehalten werden. Es ist daher bekannt, am Dach von Strassenfertigern ausschwenkbare Elemente anzuordnen. Diese werden bedarfsweise, ebenso wie der Bedienplatz, um eine senkrechte Achse ausgeschenkt und decken dann den Bedienplatz auch im ausgeschwenkten Zustand ab. Beim Verschieben der Maschine können die ausschwenkbaren Dachelemente wieder eingeschoben werden, um die Breite der Maschine zu verringern. Es hat sich jedoch gezeigt, dass diese Ausschwenkelemente den ausgeschwenkten Bedienplatz nur gering überdecken, so, dass je nach Wind und/oder Sonnenstand der Regen-und Sonnenschutz als unzureichend empfunden wird.

### DARSTELLUNG DES GEGENSTANDES DER VORLIEGENDEN BESCHREIBUNG

Nachfolgend wird ein Strassenfertiger mit einem Dach angegeben, bei welchem das Dacheinen verbesserten Schutz für einen ausgeschwenkten Bedienplatz ermöglicht.

Es ist ein Dach für eine Baumaschine vorgeschlagen, das eine verbesserte Abdeckung des Bedienstandes in jedem Betriebszustand ermöglicht und es gleichzeitig ermöglicht, die Breite der Maschine bedarfsweise auf ein zulässiges Mass zu minimieren.

Die vorliegend beschriebenen Gegenstände erhöhen den Komfort für den Bediener, indem sie ihn in geringerem Ausmasse wetterbedingten Einflüssen aussetzen. Im Zusammenhang damit kann auch ein geringeres Erkrankungsrisiko angenommen werden. Die Konzentration und Leistungsfähigkeit des Bedieners bleiben länger erhalten, was sich positiv auf das Arbeitsergebnis und allfällige Kosten für Nacharbeiten auswirkt. Ebenso wird die Ausstattung des Bedienstandes besser geschützt, was sich in einem geringeren Wartungsaufwand und/oder einer längeren Nutzungsdauer niederschlägt.

Weitere Wirkungen und Vorteile der hier beschriebenen Gegenstände, ob explizit angegeben oder nicht, ergeben sich im Lichte der vorliegenden Beschreibung.

Dies wird mittels des im Anspruch 1 beschriebenen Strassenfertigers sowie weiterer beschriebener Gegenstände erreicht.

Beschrieben ist demnach ein Strassenfertiger mit einem Bedienstand, wobei der Bedienstand wenigstens einen seitlich einer Kanzel des Bedienstandes auskragend anordenbaren Bedienerplatz umfasst. Weiterhin ist ein Dach angeordnet, welches den Bedienplatz überdeckt und welches seitlich erweiterbar ist, um im erweiterten Zustand den auskragenden Bedienerplatz zu überdecken. Das Dach umfasst ein Grundelement und wenigstens ein Erweiterungselement, wobei das Erweiterungselement an dem Grundelement gelagert ist und relativ zu dem Grundelement zwischen einer maximal eingeschobenen und einer maximal ausgezogenen Position verschiebbar ist. Das Erweiterungselement ist relativ zu dem Grundelement ausschliesslich translatorisch verschiebbar.

Dies ermöglicht es, dass sich das ausziehbare Erweiterungselement in einer senkrecht zur Translations- oder Auszugsrichtung orientierten Richtung wenigstens über die gesamte Erstreckung des Daches bzw. des Grundelementes erstreckt. Dabei ist die Auszugsrichtung insbesondere quer zur Fahrtrichtung des Strassenfertigers orientiert. Das Erweiterungselement, oder, in bestimmten Ausführungsformen beide Erweiterungselemente, erstrecken sich somit entlang der Fahrtrichtung des Strassenfertigers wenigstens über die gesamte Länge des Grundelementes. Dies wiederum ermöglicht es, einen ausgeschwenkten Bedienplatz bei ausgezogenem Dach wenigstens ebenso effektiv zu schützen wie den Bedienplatz, wenn er im Bedienstand eingeschwenkt ist, mit einem herkömmlichen Dach.

Die Längserstreckung der Erweiterungselemente über wenigstens die gesamte Längserstreckung des Grundelementes oder, in einer anderen Sichtweise, über die gesamte Längserstreckung des Daches, kommt insbesondere dann zum Tragen, wenn das Dach in beispielhaften Ausführungsformen derart bereitgestellt und angeordnet wird, dass es in der Fahrtrichtung des Strassenfertigers nach hinten über den Bedienstand bzw. über die Zugmaschine des Strassenfertigers auskragt. Mittels einer derart auskragenden Anordnung ist es nämlich prinzipiell möglich, auch dem Bedienpersonal, das auf Bedienständen einer hinter der Zugmaschine angeordneten Bohle arbeitet, einen gewissen Schutz zu bieten. Die Bohlenbedienstände können dabei insbesondere auch an seitlich über die Breite der Zugmaschine hinausragenden Positionen der Bohle angeordnet sein. Dadurch, dass bei einem Strassenfertiger, dessen Dach gemäss der vorliegenden Beschreibung ausgeführt ist, die Erweiterungselemente sich auch über den nach hinten auskragenden Teil der Bohle erstrecken, wird auch in dem nach hinten auskragenden Teil der verbesserte Schutz durch die Erweiterungselemente bereitgestellt.

Neben dem verbesserten Schutz des Bedienpersonals resultiert aus der Abschattung durch die gesamthaft vergrösserte Dachfläche auch eine verbesserte Ablesbarkeit von Instrumenten und Anzeigen, was weiter zu einer Erhöhung des Bedienkomforts beiträgt. Auch dies wirkt einer schnellen Ermüdung des Bedienpersonals entgegen und verbessert die Arbeitsqualität.

Das Erweiterungselement ist in einer Ausführungsform, bezogen auf die Fahrtrichtung des Strassenfertigers, seitlich ausziehbar.

In einer Ausführungsform ist das wenigstens eine Erweiterungselement auf dem Grundelement angeordnet. Dies ermöglicht einerseits eine verbesserte Abstützung des Eigengewichtes des Erweiterungselements. Zum anderen ergibt sich der Vorteil, dass, im Gegensatz zu den bekannten Ausschwenk-Dachelementen, die unterhalb des Grundelementes angeordnet sind, eine vergrösserte Stehhöhe innerhalb des Bedienstandes und in Verbindung damit eine vergrösserte Kopffreiheit angeboten wird.

Insbesondere ist das Grundelement als tragendes Element stabiler als das Erweiterungselement ausgeführt. Dies wird zum Beispiel dadurch erreicht, dass das Grundelement aus Blech besteht, während das Erweiterungselement aus einem Kunststoff, beispielsweise GFK, besteht. Damit wird das Gewicht des Erweiterungselementes reduziert, wodurch es einerseits besser vom Grundelement getragen werden kann, was andererseits aber auch die Bedienung des Erweiterungselements erleichtert.

Weiterhin weist das Erweiterungselement in bestimmten Ausführungsformen insbesondere zumindest an der Seite, zu der hin es ausziehbar ist, eine nach unten gerichtete Auskragung auf. Die Auskragung kann beispielsweise als Anschlag beim Einschieben des Erweiterungselementes dienen, und bietet weiterhin einen Schutz für bewegliche Teile, die der Verschiebbarkeit des Erweiterungselementes auf dem Grundelement dienen.

Insbesondere ist das Erweiterungslement mittels wenigstens einer Linearführung mit dem Grundelement verbunden. In spezifischen Ausführungsformen ist jeweils eine Linearführung im Bereich des vorderen und hinteren Ende des Grundelementes angeordnet. Hierbei beziehen sich die Richtungsangaben vorne und hinten auf Richtungen, die senkrecht zur Verschieberichtung des Erweiterungselements auf dem Grundelement liegen, bzw. auf die Fahrtrichtung des Strassenfertigers. Die Linearführung ist in bestimmten Ausführungsformen eine Teleskopführung. Unter einer Teleskopführung ist eine Linearführung mit wenigstens drei ineinander geschachtelten und zueinander verschiebbaren Längsschienen zu verstehen. Mit einer Teleskopführung wird erreicht, dass im Vergleich zur Baulänge der Linearführung ein grösserer Verstellbereich zur Verfügung gestellt wird als bei der Ausführung der Linearführung als einfacher Auszug. Bei Verwendung einer Teleskopführung ist es prinzipiell möglich, den Auszugsmechanismus derart zu gestalten, dass ein Erweiterungselement so weit ausgezogen werden kann, dass in Auszugsrichtung keine Überlappung mehr zwischen dem Grundelement und dem Erweiterungselement besteht oder sogar ein Spalt zwischen diesen gebildet wird. Selbst unter Berücksichtigung einer mindesten Restüberlappung, die im Interesse einer vollständigen Schutzfunktion mit Vorteil gewährleistet wird, kann die Breite des Daches im ausgezogenen Zustand gegenüber derjenigen im zusammengeschobenen Zustand nahezu verdoppelt werden. Letztere Aussage bezieht sich dabei auf eine Ausführungsform, bei der zwei seitliche Erweiterungselemente angeordnet sind, die im zusammengeschobenen Zustand im Bereich des Grundelementes, beispielsweise oberhalb des Grundelementes, und insbesondere in der Dachmitte, aneinanderstossen.

Die wenigstens eine Linearführung kann unterhalb des Grundelementes angeordnet sein. Dazu kann das Erweiterungselement auf wenigstens einer senkrecht zur Verschieberichtung liegenden Seite derart ausgestaltet sein, um wenigstens teilweise das Grundelement zu umfassen. Auf diese Weise wird ein Befestigungspunkt für eine unterhalb des Grundelementes angeordnete Linearführung zur Verfügung gestellt. Aus der Anordnung der Linearführung unterhalb des Grundelementes resultiert, dass die Linearführung im eingeschobenen wie ausgezogenen Zustand des Daches gleichermassen gegen Verschmutzung und gegen Wettereinflüsse geschützt ist, dies im Gegensatz zu einer Anordnung auf einer Oberseite oder Längsseite des Grundelementes. Der Verschleiss und der Wartungsbedarf werden reduziert und die Lebensdauer verlängert.

In einer Weiterbildung des hier beschriebenen Gegenstandes umfasst das Dach zwei Erweiterungselemente, welche auf gegenüberliegenden Seiten des Daches angeordnet und parallel zueinander ausschliesslich translatorisch verschiebbar sind. Dies ermöglicht es beispielsweise, ausschwenkbare Bedienplätze, die auf beiden Seiten einer Baumaschine angeordnet sind, gleich effektiv zu schützen. Insbesondere ist jedes Erweiterungselement unabhängig von dem jeweils anderen Erweiterungselement relativ zu dem Grundelement verschiebbar. In spezifischen Ausführungsformen sind zwei Erweiterungselemente spiegelbildlich zueinander ausgeführt, und derart, dass sie im maximal eingeschobenen Zustand jedes Erweiterungselementes in der Dachmitte aneinanderstossen, was aber keinesfalls zwingend ist und nicht einschränkend für den Gegenstand der vorliegenden Beschreibung verstanden werden soll. Ebenso kann eine Vorrichtung vorgesehen sein, mittels der die beiden Erweiterungselemente im maximal eingeschobenen Zustand jedes Erweiterungselementes miteinander koppelbar sind. Dies vermag dazu beizutragen, die eingeschobenen Dachhälften gegen ein ungewolltes Ausfahren zu sichern, was wiederum, wie unten weiter ausgeführt wird, bei Verschiebe- oder Transportfahrten vorteilhaft ist.

In weiteren Ausführungsformen weist das Erweiterungselement, und insbesondere jedes Erweiterungselement, im vollständig ausgezogenen Zustand eine Überdeckung mit dem Grundelement auf. Damit wird die Stabilität des Daches im ausgezogenen Zustand verbessert. Ebenso dient dies einer vollständigen Schutzwirkung, ohne Lücken zwischen dem Grundelement und einem Erweiterungselement.

Weiterhin kann gemäss eines weiteren Aspektes der vorliegend beschriebenen Gegenstände ein Mechanismus vorgesehen sein, mittels dem das Erweiterungselement, und insbesondere jedes Erweiterungselement, relativ zu dem Grundelement festsetzbar ist. Dieser Festsetzmechanismus kann derart ausgestaltet sein, dass ein Festsetzen einerseits in einer vollständig eingeschobenen als auch in einer vollständig ausgezogenen Position möglich ist. Weiter kann zusätzlich vorgesehen sein, dass der Festsetzmechanismus auch ein Festsetzen des Erweiterungselementes in wenigstens einer Zwischenposition und insbesondere in mehreren Zwischenpositionen ermöglicht. Damit wird die Flexibilität des Einsatzes erweitert, und es ist beispielsweise ermöglicht, jeweils einen günstigen Kompromiss zwischen einer guten Abdeckung des Bedienplatzes und einer möglicherweise eingeschränkten zulässigen Breite über Alles zu erreichen. In einer Ausführungsform umfasst der Festsetzmechanismus einen Rastmechanismus. Dabei bietet ein formschlüssiger Rastmechanismus gegenüber einem kraftschlüssigen Klemmmechanismus, der beispielsweise mittels einer Klemmschraube realisiert sein kann, den Vorteil einer inhärenten Sicherheit. Dabei ist die Verwendung eines Klemmechanismus in Verbindung mit einem Dach der vorliegend beschriebenen Art keineswegs ausgeschlossen. Der Rastmechanismus kann mehrstufig ausgeführt sein. Gemäss weiterer Ausführungsformen umfasst der Festsetzmechanismus ein mittels Federkraft wirkendes Element. Dieses Festsetzelement kann beispielsweise ein elastisches und/oder federnd gelagertes Element sein. In einer beispielhaften Ausführungsform handelt es sich um ein elastisches Rastblech. Das genannte mittels Federkraft wirkende Element bewirkt beispielsweise in einem unbetätigten Zustand durch eine elastische Rückstellkraft ein Festsetzen des Erweiterungselementes relativ zu dem Grundelement, und weiterhin insbesondere ein Einrasten wenn der Festsetzmechanismus ein Rastmechanismus ist. Somit ist der Festsetzmechanismus inhärent sicher. Ein Lösen, beispielsweise während einer Transportfahrt, und beispielsweise eine damit verbundene Verbreiterung des Daches über ein zulässiges Mass hinaus sowie daraus resultierende potenzielle Schäden werden damit sicher vermieden.

In beispielhaften Ausführungsformen ist das Festsetzelement an einem Erweiterungselement des Daches angeordnet und dient gleichzeitig als Ausziehgriff. Dies ermöglicht eine Einhandbedienung des Daches beim Bewegen eines Erweiterungselementes, da mit einem Griff zu einem einzigen Betätigungselement der Festsetzmechanismus gelöst und gleichzeitig das Erweiterungselement auf dem Grundelement verschoben werden kann. Beim Loslassen eines mittels Federkraft wirkenden Festsetzelementes der oben beschriebenen Art kehrt dieses in seine Ausgangsposition zurück, wodurch die Position des Erweiterungselementes auf dem Grundelement wieder gesichert ist.

Gemäss weiterer Aspekte umfasst das Dach wenigstens eine Stütze, über die das Dach mit dem Strassenfertiger verbunden ist. Insbesondere kann das Dach mittels der wenigstens einen Stütze auf einem Bedienstand bzw. einer Kanzel eines Bedienstandes oder an einem Chassis des Strassenfertigers angeordnet werden. Das Grundelement ist mit der Stütze gelenkig verbunden, derart, dass die Stütze relativ zu dem Grundelement bzw. dem Dach zwischen zwei Positionen verstellbar ist. In einer ersten Position der Stütze ist das Dach auf dem Strassenfertiger aufgestellt. In einer zweiten Position der Stütze ist das Dach heruntergeklappt. Wenn die Stütze dabei sowohl mit der Kanzel oder der Maschine als auch mit dem Dach gelenkig verbunden ist, kann das Dach wahlweise ein- und ausgeklappt werden. Im ausgeklappten oder aufgestellten Zustand wird eine ausreichende Höhe für den Bediener bereitgestellt, während im eingeklappten Zustand die Gesamthöhe, insbesondere für den Transport, entsprechend vermindert wird. In spezifischen Ausführungsformen umfasst das Dach vier Stützen, die insbesondere in einer rechteckigen oder trapezförmigen Konfiguration angeordnet sind, derart, dass je zwei Stützen seitlich zueinander versetzt sind und zwei Stützen an einer vorne und einer hinten liegenden Position angeordnet sind.

Weiterhin kann wenigstens ein Erweiterungselement Mittel aufweisen, die derart mit wenigstens einer Stütze zusammenwirken, dass die Stütze nur dann eine von der ersten Position, in der das Dach aufgestellt ist, abweichende Position einnehmen kann, wenn sich das Erweiterungselement in der maximal eingeschobenen Position befindet. Damit wird sichergestellt, dass das Dach nur dann in die Transportposition eingeklappt werden kann, wenn auch die Erweiterungselemente eingeschoben sind, das Dach also eine minimale Breite für einen Transport aufweist. Es kann weiterhin vorgesehen sein, dass wenigstens eine Stütze in einer wenigstens vollständig zusammengeklappten Position ein Erweiterungselement gegen eine Verschiebung relativ zu dem Grundelement sichert. Dies stellt sicher, dass ein Erweiterungselement nur dann in eine auch nur teilweise ausgezogene Position gelangen kann, wenn das Dach auf der oder den Stützen ausgeklappt ist, sich also in der Arbeitsposition befindet. Dies bewirkt ebenfalls eine inhärente Sicherheit gegen ein ungewolltes Ausfahren eines Erweiterungselementes des Daches. Ebenso kann die Stütze, oder ein Rahmen, mit dem die Stütze in Verbindung steht, derart ausgeführt sein, dass die Stütze in der wenigstens vollständig zusammengeklappten Position einen Festsetzmechanismus zum Festsetzen des Erweiterungselementes des Daches relativ zu dem Grundelement in einer Festsetzposition sichert. Das heisst, wenigstens in der vollständig eingeklappten Position des Daches auf der oder den Stützen, und insbesondere in jeder anderen Position als der ersten Position, in der das Dach aufgestellt ist, ist der Festsetzmechanismus gegen ein Lösen gesichert, und eine Verschiebung eines Erweiterungselementes auf dem Grundelement ist also verunmöglicht.

Im Rahmen der vorliegenden Beschreibung ist ebenfalls ein Dach für eine Baumaschine und insbesondere für einen Strassenfertiger offenbart, welches eines oder mehrere der oben beschriebenen Merkmale aufweist, die die Ausgestaltung des Daches betreffen.

Weiterhin offenbart ist ein Bedienstand für eine Baumaschine und insbesondere für einen Strassenfertiger, welcher ein Dach gemäss einer der vorstehenden beschriebenen Ausführungsformen eines Daches umfasst, wobei der Bedienstand wenigstens einen von einer Kanzel des Bedienstandes seitlich auskragend anordenbaren Bedienerplatz umfasst. Beispielsweise ist der Bedienerplatz seitlich ausschwenkbar, wodurch er seitlich auskragend anordenbar ist. Wenigstens ein Erweiterungselement des Daches ist dabei derart vorgesehen ist, um im ausgezogenen Zustand einen auskragenden Bedienerplatz zu überdecken. In einer Ausführungsform ist der Bedienstand beispielsweise derart ausgeführt, dass die Querabmessung des Daches bei vollständig eingeschobenem Erweiterungselement oder vollständig eingeschobenen Erweiterungselementen zumindest näherungsweise der Querabmessung einer Plattform der Bedienstandes entspricht und dieses in Querrichtung allenfalls gering überragt. Es wird ohne Weiteres verstanden, dass sich Querabmessung dabei insbesondere auf die Abmessung in Richtung der Breitenerstreckung einer Baumaschine bezieht, zur Verwendung mit der der Bedienstand vorgesehen und konzipiert ist. Hierbei ist selbstverständlich auch die vorgesehene und wohldefinierte bestimmungsgemässe Einbaulage des Bedienstandes auf der Baumaschine zu berücksichtigen. Somit wird sichergestellt, dass der Bedienstand bei einem in Grundstellung befindlichen, das heisst eben nicht auskragendem und insbesondere eingeschwenktem, Bedienerplatz von dem Dach überdeckt ist, während das Dach in zusammengeschobenem Zustand die Breite über Alles des Bedienstandes und somit einer Baumaschine nicht vergrössert. Damit wird gerade für Verschiebefahrten und/oder Transporte einer Baumaschine deren Breite über Alles minimiert respektive durch das Dach zumindest nicht vergrössert. Bei ausgeschwenktem oder sonst seitlich auskragendem Bedienerplatz und ausgezogenem Dach soll es insbesondere ermöglicht sein, dass der Bedienerplatz wenigstens vollständig von dem Dach überdeckt ist, damit die oben angegebenen Vorteile des Daches, wie sie vorstehend angegeben sind, möglichst gut zum Tragen kommen. Dies bedingt einerseits, dass das Erweiterungselement des Daches wenigstens so weit ausziehbar ist wie der Bedienerplatz von einer Grundplattform des Bedienstandes auszukragen vermag. Andererseits soll auch in einer Längserstreckung das Erweiterungselement des Daches eine entsprechende Abdeckung bieten. Dies wird dadurch ermöglicht, dass das Erweiterungselement des Daches translatorisch verschiebbar ist und weiterhin auf einem Grundelement des Daches angeordnet ist. Damit ergeben sich quer zur Verschieberichtung des Erweiterungselements auf dem Grundelement des Daches keine prinzipiellen Einschränkungen der Abmessungen des Erweiterungselementes, womit eine geforderte Abdeckung in einer Richtung quer zu der genannten Verschieberichtung, insbesondere also in Längsrichtung, problemlos realisierbar ist.

Aus dem oben gesagten resultiert auch ein Bedienstand der genannten Art, bei dem der Bedienplatz im nicht auskragenden und insbesondere eingeschwenkten Zustand von dem Dach im zusammengeschobenen Zustand überdeckt ist.

Die oben dargestellten Ausgestaltungen der beschriebenen Gegenstände können selbstverständlich untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: einen Bedienstand mit einem ausziehbaren Dach der oben beschriebenen Art im ausgezogenen, verbreiterten Zustand;
- Fig. 2: den Bedienstand aus Figur 1, wobei die Erweiterungselemente maximal eingeschoben sind;
- Fig. 3: den Bedienstand aus den Figuren 1 und 2 in einer Seitenansicht;
- Fig. 4: den Bedienstand gemäss den Figuren 1 bis 3 mit einem für den Transport zusammengeklappten Dach;
- Fig. 5: den Bedienstand mit zusammengeklapptem Dach in einer perspektivischen Draufsicht;
- Fig. 6: eine Draufsicht auf den Bedienstand mit maximal verbreitertem Dach;
- Fig. 7: eine Detailansicht der Anordnung einem Teleskopelement als Linearführung;
- Fig. 8: eine Detailansicht eines als Festsetzmechanismus für ein Erweiterungselement des Daches dienenden Rastmechanismus;
- Fig. 9: einen beispielhaften Radfertiger, welcher ein Dach respektive einen Bedienstand gemäss der vorliegenden Offenbarung umfasst.

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

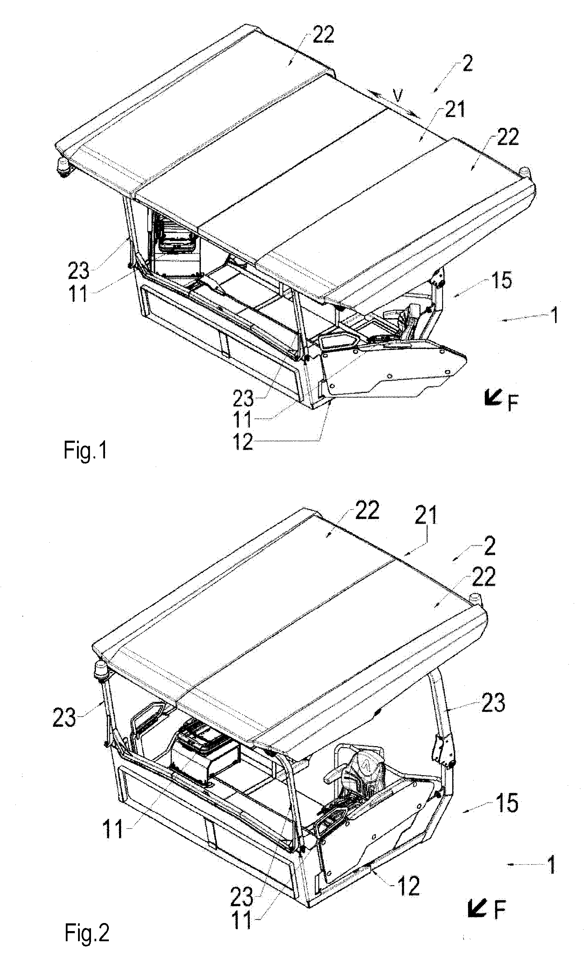

Figur 1 zeigt ein Beispiel für einen Bedienstand 1 für eine Baumaschine, insbesondere für einen Strassenfertiger, welcher ein Dach 2 umfasst. Der Bedienstand ist zur Verwendung auf einer Baumaschine vorgesehen, dessen Fahrt- und Arbeitsrichtung bei F gekennzeichnet ist. Der Bedienstand mit einer Kanzel 15 umfasst zwei Bedienplätze 11, die auf an sich bekannte und daher nicht explizit dargestellte Art von einer Plattform 12 respektive von der Kanzel 15 ausschwenkbar sind. Auf diese Weise kann der Bediener sich einerseits einen Bedienplatz auf der Seite der Baumaschine aussuchen, welcher für die durchzuführende Arbeit am besten geeignet ist, ihm also zum Beispiel die beste Sicht auf das massgebliche Arbeitsareal einer Baustelle ermöglicht. Weiter kann jeder Bedienplatz, wie erwähnt, in eine von der Kanzel 15 seitlich auskragende Position gebracht werden, welche insbesondere auch seitlich neben dem Chassis der Baumaschine zu liegen kommt. Die Sicht des Bedieners auf das Arbeitsareal wird weiter verbessert, und die Kommunikation mit weiteren Arbeitern wird aufgrund der exponierten Position erleichtert. Das Dach 2 umfasst ein Grundelement 21 und zwei Erweiterungselemente 22, welche auf dem Grundelement 21 angeordnet sind und weiterhin entlang einer durch V gekennzeichneten Orientierung translatorisch verschiebbar sind. Die Erweiterungselemente 22 sind in einer ausgezogenen Position dargestellt. Dabei ragen die Erweiterungselemente 22 seitlich, das heisst, insbesondere senkrecht zur Arbeits- oder Fahrtrichtung F, über das Grundelement hinaus, und überdecken eine grössere Breite senkrecht zur Arbeits- oder Fahrtrichtung F als die Breite der Kanzel 15. Ebenso erstrecken sich die Erweiterungselemente 22 in Längsrichtung, also entlang der Arbeits- und Fahrtrichtung F, über die gesamte Länge des Grundelementes des Daches. Insbesondere überdecken Sie auch, im Gegensatz zu den aus dem Stand der Technik bekannten ausschwenkbaren Dachelementen, die gesamte Länge des Daches, und dies entlang der gesamten Längserstreckung mit ihrem gesamten Auszugsmass. Dieses Auszugsmass beträgt beispielsweise 900 mm. Damit bietet das Dach 2 im dargestellten ausgezogenen Zustand einen verbesserten Schutz für die Kanzel des Bedienstandes beziehungsweise auf der Kanzel anwesendes Bedienpersonal. Weiterhin umfasst das Dach Stützen 23, die einen Abstand der Dachelemente von der Kanzel und damit verbunden eine erforderliche Stehhöhe und Kopffreiheit innerhalb des Bedienstandes gewährleisten. Weitere Funktionen der Stützen in dem beispielhaft dargestellten Dach sind unten näher beschrieben.

Figur 2 zeigt den Bedienstand aus Figur 1 mit eingeschobenen Erweiterungselementen des Daches. Da die Erweiterungselemente auf dem Grundelement angeordnet sind, und im in Figur 2 dargestellten eingeschobenen Zustand in der Mitte des Daches bündig aneinanderstossen, ist das Grundelement 21 im dargestellten vollständig eingeschobenen Zustand der Erweiterungselemente 22 nicht sichtbar. Zu erkennen ist weiterhin, dass das Dach in Längsrichtung, also entlang der Fahrt- oder Arbeitsrichtung F, nach hinten auskragt und die Kanzel des Bedienstandes nach hinten überragt.

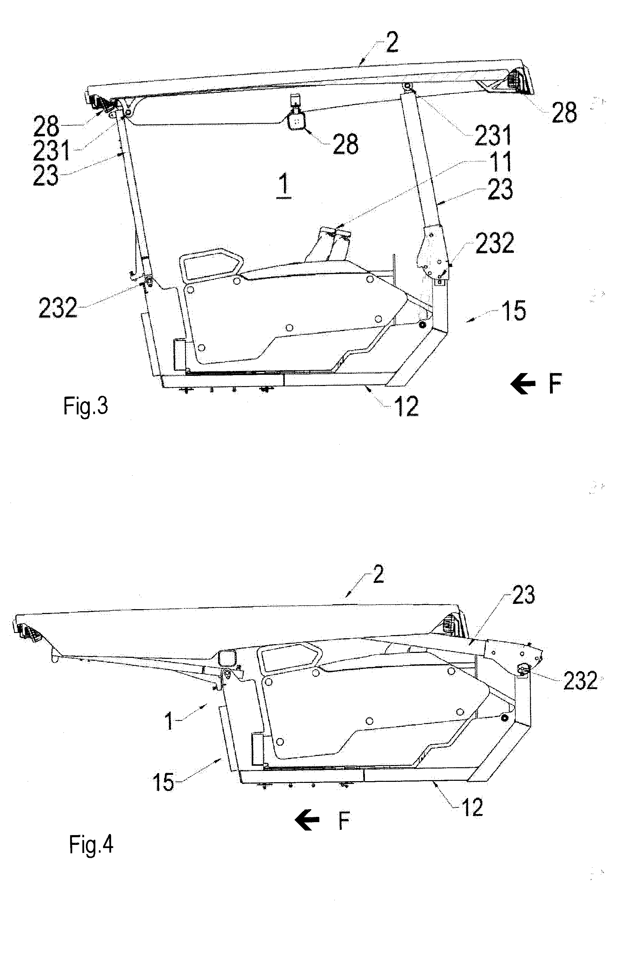

Figur 3 zeigt eine Seitenansicht des Bedienstandes. Wiederum erkennbar ist, dass das Dach 2 die Kanzel 15 nach hinten überragt. Die Stützen 23 sind mittels Gelenken 231 mit dem Grundelement des Daches verbunden. Weiterhin sind die Stützen 23 mittels Gelenken 232 mit der Kanzel 15 verbunden. Die Gelenke erlauben es, das Dach 2 relativ zur Kanzel 15 in Fahrtrichtung nach vorne und unten abzuklappen. In der dargestellten Ausführungsform sind die Gelenke 231 und 232 in der Seitenansicht auf den Ecken eines Parallelogramms angeordnet. Die Gelenke der Verbindung der Stützen mit dem Dach wie auch mit der Kanzel des Bedienstandes ermöglicht es, das Dach für den Transport der Baumaschine nach vorne unten zu klappen, und auf diese Weise die Gesamthöhe der Baumaschine zu vermindern. Dies erweist sich als nützlich, weil auf diese Weise ein Verschieben oder eine Transportfahrt der Baumaschine ohne eine Demontage des Daches möglich ist. Durch Abklappen des Daches kann auch beim Transport der Baumaschine auf einer Transportvorrichtung, beispielsweise auf einem Tieflader, eine zulässige Maximalhöhe eingehalten werden, ohne das Dach demontieren zu müssen. In der dargestellten Ausführungsform sind weiterhin Beleuchtungseinrichtungen 28 an dem Dach angeordnet, welche zur Beleuchtung eines Arbeitsareals der Baumaschine dienen. Zweckmässig sind die Beleuchtungseinrichtungen 28 in der dargestellten Ausführungsform an den Erweiterungselementen des Daches befestigt, und werden beim Ausziehen und Einschieben der Erweiterungselemente mit diesen bewegt. Damit ist sichergestellt, dass, wenn der Bedienplatz ausgeschwenkt ist, der Bediener bzw. der Bedienplatz der Beleuchtung durch die Beleuchtungseinrichtungen 28 nicht im Wege ist, zumindest dann nicht, wenn auch ein entsprechendes Erweiterungselement des Daches ausgezogen ist.

In der Figur 4 ist der Bedienstand mit einem für den Transport eingeklappten Dach dargestellt. Deutlich erkennbar ist, dass die Gesamthöhe signifikant vermindert ist. Indem das Dach 2 an einem hinteren Ende der Kanzel 15 verlängert ist, ist auch im zusammengeklappten Zustand ein Wetterschutz für die Bedienplätze des Bedienstandes gewährleistet.

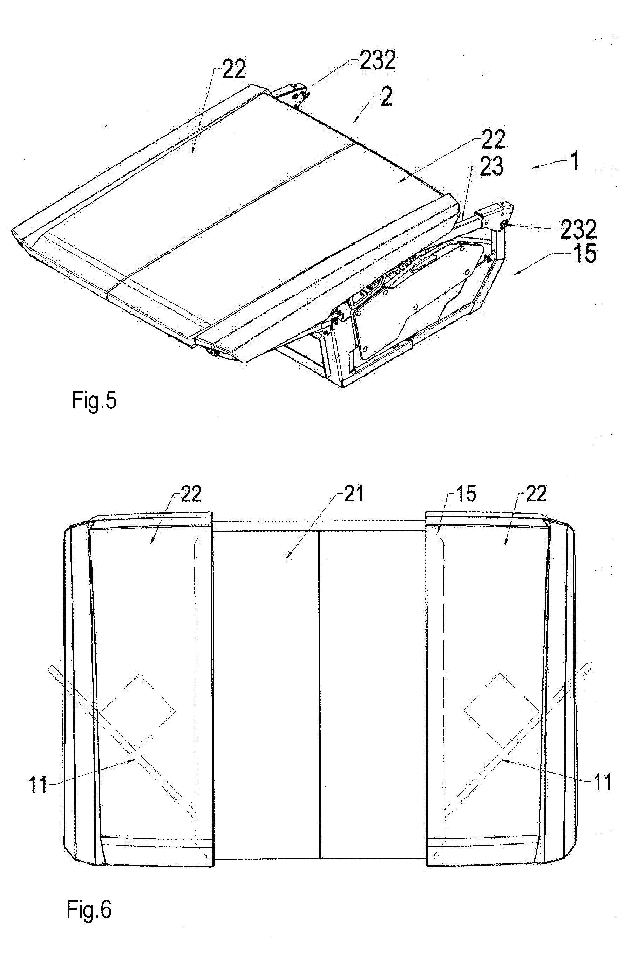

Eine Ansicht des Bedienstandes 1 mit eingeklapptem Dach 2 ist in der Figur 5 nochmals in einer perspektivischen Draufsicht dargestellt. Wie in dieser Ansicht zu erkennen ist, sind hierbei die Erweiterungselemente 22 des Daches zusammengeschoben. Dies ist selbstverständlich in einer Transportposition des Bedienstandes zweckmässig, da sowohl eine zulässige Maximalhöhe als auch eine zulässige Maximalbreite für eine Transportfahrt nicht überschritten werden soll. Es kann sich weiter als zweckmässig erweisen, wenn die Erweiterungselemente 22 des Daches in der dargestellten eingeklappten Position gegen ein seitliches Verschieben gesichert sind.

Figur 6 stellt eine Draufsicht des Bedienstandes mit ausgezogenen Erweiterungselementen 22 und ausgeschwenkten Bedienplätzen 11 dar. Das Dach mit dem Grundelement 21 und den Erweiterungselementen 22 deckt die Kanzel 15 des Bedienstandes samt der ausgeschwenkten Bedienplätze 11 ab. Damit wird der eingangs erwähnte Wetter- und Sonnenschutz für alle Elemente des Bedienstandes sowie für einen Bediener auch bei ausgeschwenkten Bedienplätzen erreicht. Dabei weisen die Erweiterungselemente im dargestellten maximal ausgezogenen Zustand eine Überdeckung mit dem Grundelement auf, welche einen lückenlosen und vollständigen Schutz im gesamten Bereich des ausgezogenen Daches gewährleistet.

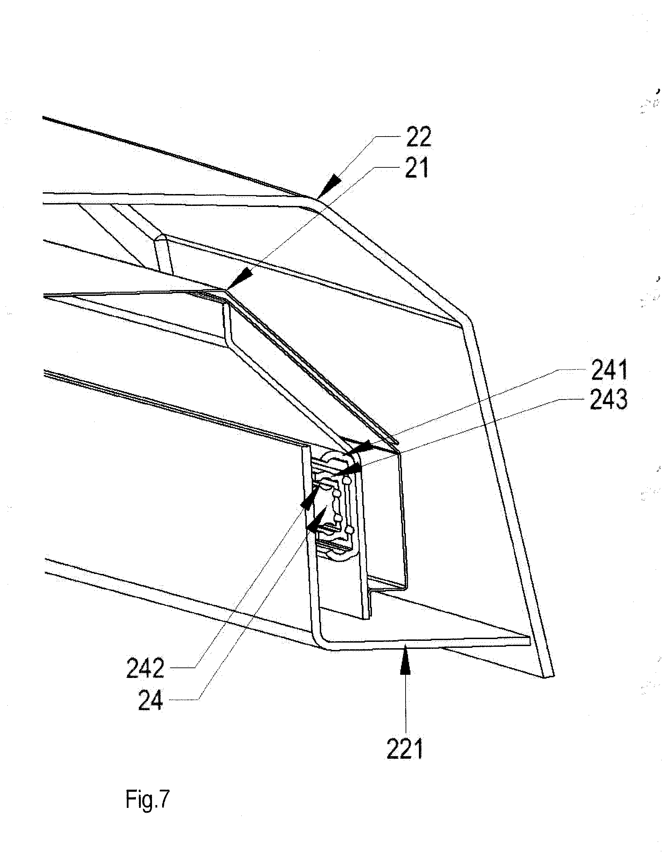

In der Figur 7 ist die verschiebliche Anordnung eines Erweiterungselements 22 an dem Grundelement 21 mittels eines Teleskopauszugs 24 gemäss einem Ausführungsbeispiel detaillierter dargestellt. Am Erweiterungselement 22 ist an der Vorderseite und Hinterseite des Daches ein Winkelelement 221 angeordnet, welches das Grundelement 21 umgreift. Eine erste Teleskopschiene 241 des Teleskopauszugs ist mit dem Grundelement 21 verbunden. Eine zweite Teleskopschiene 242 ist mit dem Winkelelement 221 des Erweiterungselements 22 verbunden. Dabei sind die Teleskopschienen 242 und 241 zueinander verschieblich, womit eine Translationsbewegung des Erweiterungselements 22 relativ zum Grundelement 21 entlang einer Längserstreckung des Teleskopauszugs 24 ermöglicht wird. Zwischen den Teleskopschienen 241, 242 ist eine Zwischenschiene 243 angeordnet. Die Translationsbewegung teilt sich damit zwischen den Schienen 241, 242 und 243 auf, womit eine Führung innerhalb der Teleskopschienen auch dann gewährleistet ist, wenn die Schiene 242 vollständig oder im Wesentlichen vollständig aus der Schiene 241 herausgezogen ist. Die Schiene 243 ist auch in diesem Zustand noch in einer Wirkverbindung sowohl mit der Schiene 241 als auch mit der Schiene 242, das heisst, in Längserstreckung der Teleskopschiene überlappt die Zwischenschiene 243 auch im vollständig ausgezogenen Zustand des Teleskopauszugs sowohl die Schiene 241 als auch die Schiene 242, und gewährleistet somit eine Führung wie auch eine Kraftübertragung. Dadurch, dass die als Linearführungselement dienende Teleskopschiene unterhalb des Grundelementes angeordnet ist und weiterhin mittels des Winkelelementes 221 von dem Erweiterungselement umfasst ist, ist ein derart angeordnetes Linearführungselement bestens gegen Verschmutzung und Umwelteinflüsse geschützt.

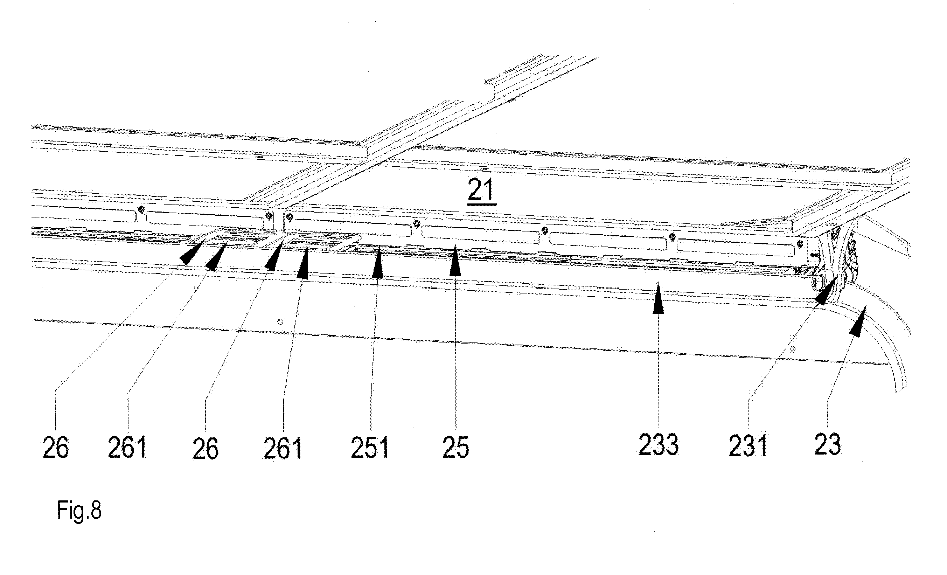

In der Figur 8 ist schliesslich ein Festsetzmechanismus für die Verschieblichkeit der Erweiterungselemente zum Grundelement 21 des Daches dargestellt. Am Grundelement 21 ist eine Rastschiene 25 angeordnet. Elastische Rastbleche 26 sind auf nicht ersichtliche, aber an sich bekannte Weise fest mit den in dieser Ansicht nicht sichtbaren Erweiterungselementen verbunden. Die Rastbleche 26 sind derart ausgeführt, dass sie in einer unbetätigten Position mittels einer elastischen, federnden Rückstellkraft mit Rastöffnungen 261 in Rasten 251 der Rastschiene 25 eingreifen und somit eine formschlüssige Sicherung der Erweiterungselemente gegen ein Verschieben auf dem Grundelement 21 bewirken. Da eine Mehrzahl von Rasten auf der Rastschiene angeordnet ist, kann das Erweiterungselement in verschiedenen Zwischenpositionen zwischen vollständig eingeschobenen und einer vollständig ausgezogenen Position relativ zum Grundelement fixiert werden. Durch Herabziehen eines Rastbleches 26 wird die formschlüssige Verbindung zwischen der Rastöffnung und der Raste gelöst, und das Erweiterungselement kann durch seitliches Verschieben des Rastbleches 26 in eine andere Position relativ zum Grundelement 21 des Daches gebracht werden. Beim Loslassen des Rastbleches federt dieses wieder nach oben zurück und stellt wiederum einen Formschluss mit einer Raste 251 her. Der Festsetzmechanismus ist in diesem Beispiel an der Vorderseite des Daches angeordnet. Wie weiter zu erkennen ist, sind die vorderen Stützen 23 des Daches durch eine Querstrebe 233 miteinander verbunden. In der bereits oben dargestellten Art und Weise sind die Stütze 23 und die Querstrebe 233 mittels eines Gelenkes 231 mit dem Grundelement 21 des Daches verbunden. Wird nunmehr das Dach auf die oben beschriebene Art und Weise zusammengeklappt, so kommt die Querstrebe 233 unter den Rastblechen 26 zu liegen und setzt diese in einer eingerasteten Position fest. Falls sich eines der Rastbleche 26 nicht in der eingerasteten Position befindet, also die Öffnung 261 nicht mit einer Raste 25 gekoppelt ist, so ist kein vollständiges Zusammenklappen des Daches möglich. Damit wird sichergestellt, dass die Erweiterungselemente in der zusammengeklappten Transportposition des Daches gegen ein Verschieben auf dem Grundelement gesichert sind.

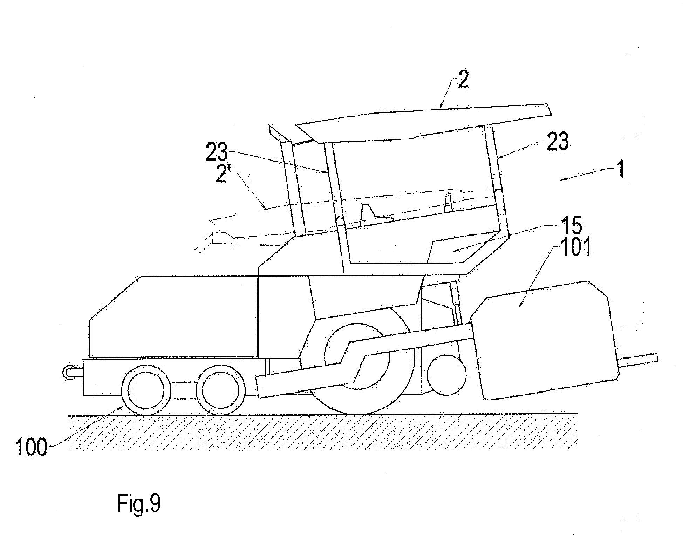

Figur 9 schliesslich zeigt einen beispielhaften Radfertiger 100 mit einer Bohle 101 sowie einem Bedienstand 1, welcher ein Dach gemäss der vorliegenden Offenbarung aufweist. In einer Arbeitsstellung ist das Dach 2 aufgeklappt und mittels der Stützen 23 auf der Kanzel 15 des Bedienstandes abgestützt. Gestrichelt ist das Dach 2' in der zusammengeklappten Transportposition dargestellt. Deutlich erkennbar ist, wie sich in der Transportposition die Gesamthöhe des Fertigers vermindert, derart, dass auch beim Transport beispielsweise auf einem Tieflader die Gesamthöhe der Transporteinheit innerhalb eines zulässigen Masses bleibt. Die maximale Höhe der Dachoberkante beträgt im aufgeklappten Zustand beispielsweise weniger als 4000 mm über der Fahrbahnkante, um den Fertiger bei üblichen Durchfahrtshöhen von Brücken, Unterführungen und dergleichen ohne Demontage des Daches verwenden zu können. Ebenso dient das Einklappen des Daches dazu, die Höhe des Fertigers auch dann, wenn er auf ein Transportmittel aufgeladen ist, auf weniger als 4000 mm über einer Fahrbahnoberkante zu begrenzen. Die Auskragung des Daches am hinteren Ende kann bedarfsweise derart dimensioniert werden, um auch für Bedienplätze auf der Bohle eine Schutzwirkung zu bieten. Mit dem Dach gemäss der vorliegenden Beschreibung kann diese Schutzwirkung auch für Bedienplätze auf der Bohle realisiert werden, welche seitlich über die Breite der Zugmaschine des Fertigers hinausragen.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

### BEZUGSZEICHENLISTE

- 1: Bedienstand
- 2, 2': Dach
- 11: Bedienplatz
- 12: Plattform
- 15: Kanzel
- 21: Grundelement
- 22: Erweiterungselement
- 23: Stütze
- 24: Teleskopelement
- 25: Rastschiene
- 26: Rastblech
- 28: Beleuchtungseinrichtung
- 100: Strassenfertiger, Radfertiger
- 101: Bohle
- 221: Winkelelement
- 231: Gelenk, an Dach
- 232: Gelenk, an Kanzel
- 233: Querstrebe
- 241: Teleskopschiene
- 242: Teleskopschiene
- 243: Teleskopschiene
- 251: Raste
- 261: Rastöffnung

- F: Arbeitsrichtung, Fahrrichtung
- V: Verschieberichtung

## Patentansprüche

1. Strassenfertiger, umfassend einen Bedienstand (1), wobei der Bedienstand wenigstens einen seitlich einer Kanzel (15) des Bedienstandes auskragend anordenbaren Bedienerplatz (11) umfasst, und wobei weiterhin ein Dach angeordnet ist, welches den Bedienstand überdeckt und welches seitlich erweiterbar ist, um im erweiterten Zustand den auskragenden Bedienerplatz zu überdecken,
wobei das Dach ein Grundelement (21) und wenigstens ein Erweiterungselement (22) umfasst, welches Erweiterungselement an dem Grundelement gelagert ist und relativ zu dem Grundelement zwischen einer maximal eingeschobenen und einer maximal ausgezogenen Position verschiebbar ist, wobei das Erweiterungselement relativ zu dem Grundelement ausschliesslich translatorisch verschiebbar ist.

2. Strassenfertiger gemäss Anspruch 1, wobei das Erweiterungslement (22) mittels wenigstens einer Linearführung (24) mit dem Grundelement (21) verbunden ist.

3. Strassenfertiger gemäss dem vorstehenden Anspruch, wobei die Linearführung (24) eine Teleskopführung ist.

4. Strassenfertiger gemäss einem der vorstehenden Ansprüche, wobei das Dach zwei Erweiterungselemente (22) umfasst, welche auf gegenüberliegenden Seiten des Daches (2) angeordnet und parallel zueinander und ausschliesslich translatorisch verschiebbar sind.

5. Strassenfertiger gemäss dem vorstehenden Anspruch, wobei jedes Erweiterungselement (22) unabhängig von dem jeweils anderen Erweiterungselement relativ zu dem Grundelement (21) verschiebbar ist.

6. Strassenfertiger gemäss einem der vorstehenden Ansprüche, wobei sich die Erweiterungselemente (22) in Fahrtrichtung des Strassenfertigers wenigstens über die gesamte Länge des Grundelementes (21) erstrecken.

7. Strassenfertiger gemäss einem der vorstehenden Ansprüche, wobei ein Mechanismus (25, 26) vorgesehen ist, mittels dem das Erweiterungselement, und insbesondere jedes Erweiterungselement, relativ zu dem Grundelement festsetzbar ist.

8. Strassenfertiger gemäss dem vorstehenden Anspruch, wobei der Festsetzmechanismus einen Rastmechanismus (251, 261) umfasst.

9. Strassenfertiger gemäss einem der beiden vorstehenden Ansprüche, wobei der Festsetzmechanismus ein mittels Federkraft wirkendes Element (26) umfasst, wobei das Element insbesondere in einem unbetätigten Zustand mittels Federkraft ein Festsetzen des Erweiterungselementes relativ zu dem Grundelement bewirkt und weiterhin insbesondere ein Einrasten bewirkt.

10. Strassenfertiger gemäss einem der vorstehenden Ansprüche, wobei das Dach wenigstens eine Stütze (23) umfasst, über die das Dach mit dem Strassenfertiger verbunden ist und mit welcher das Grundelement gelenkig verbunden ist, derart, dass die Stütze relativ zu dem Grundelement zwischen wenigstens zwei Positionen verstellbar ist, wobei das Dach in einer ersten Position der Stütze auf dem Strassenfertiger aufgestellt ist und in einer zweiten Position der Stütze heruntergeklappt ist.

11. Strassenfertiger gemäss dem vorstehenden Anspruch, wobei weiterhin wenigstens ein Erweiterungselement Mittel aufweist, die derart mit wenigstens einer Stütze zusammenwirken, dass die Stütze nur dann eine von der ersten Position abweichende Position einnehmen kann, wenn sich das Erweiterungselement in der maximal eingeschobenen Position befindet.

12. Strassenfertiger gemäss einem der beiden vorstehenden Ansprüche, wobei wenigstens eine Stütze (23, 233) in einer wenigstens vollständig zusammengeklappten Position ein Erweiterungselement gegen eine Verschiebung relativ zu dem Grundelement sichert.

13. Strassenfertiger gemäss dem vorstehenden Anspruch, wobei die Stütze in der wenigstens vollständig zusammengeklappten Position den Festsetzmechanismus (25, 26) in einer Festsetzposition sichert.

14. Strassenfertiger gemäss einem der vorstehenden Ansprüche, wobei ein Bedienplatz (11) im nicht auskragenden Zustand von dem Dach (2) im zusammengeschobenen Zustand überdeckt ist.

15. Strassenfertiger gemäss einem der vorstehenden Ansprüche, wobei das Dach in Fahrtrichtung des Strassenfertigers nach hinten über den Bedienstand auskragt.
